Europäisches Patentamt

**(19)** European Patent Office

Office européen des brevets

**(11)** Numéro de publication : **0 444 375 A1**

## **(12)** DEMANDE DE BREVET EUROPEEN

**(21)** Numéro de dépôt : **90470067.1**

**(22)** Date de dépôt : **04.12.90**

**(51)** Int. Cl.⁵ : **F02B 75/32, F04B 35/00, F02B 53/02, F03G 3/00**

Le titre de l'invention a été modifié (Directives relatives à l'examen pratiqué à l'OEB, A-III, 7.3)

**(30)** Priorité : **06.12.89 FR 8916434**

**(43)** Date de publication de la demande :
**04.09.91 Bulletin 91/36**

**(84)** Etats contractants désignés :
**DE ES FR GB IT SE**

**(71)** Demandeur : **Canot, Albert**
**Le Void de Girancourt**
**F-88390 Darnieulles (FR)**

**(72)** Inventeur : **Canot, Albert**
**Le Void de Girancourt**
**F-88390 Darnieulles (FR)**

**(54)** Propulseur à pistons droits et toriques.

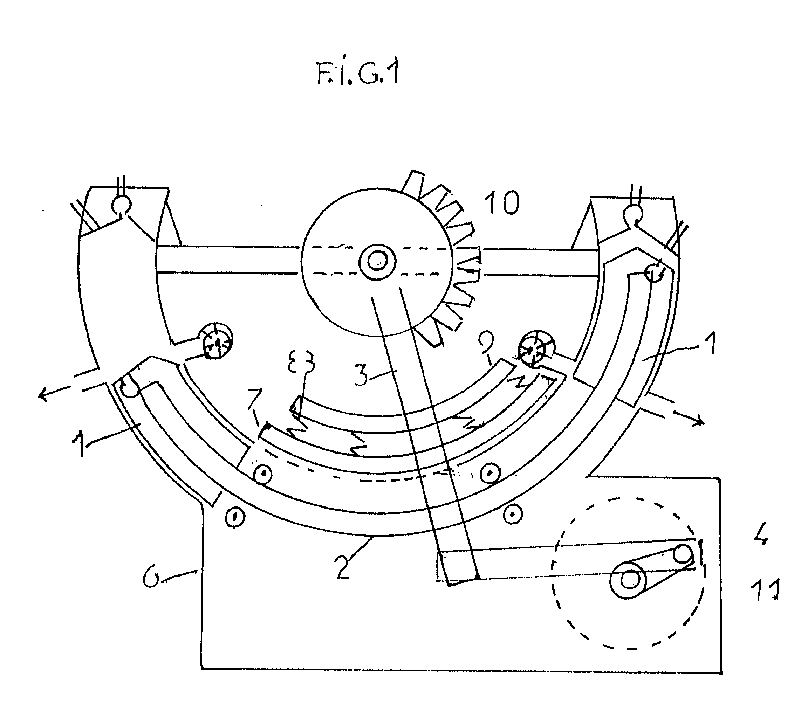

**(57)** Le propulseur à pistons toriques est un moteur deux temps pouvant fonctionner à l'essence, ou en Diésel, muni de quatre pistons toriques (1) reliés par des tiges courbes (2) ses pistons appliquent des forces sur les culasses en étants arrétés dans leur projection et rejetés vers l'arriére par des combustions, des déflagrations, voir des détonations un peu avant les passages des points morts, deux dispositifs identiques à la fig. 1 sont accouplés par des engrenages (10), ce propulseur donne également un mouvement rotatif à l'aide d'enclique-tages, il peut fonctionner à l'essence ou en Diésel avec des carburants semblables ou diffé-rents injectés dans une chambre creusée dans la culasse et dans une chambres creusée dans le piston, étant muni d'un carter (6) le graissage des pistons peut s'effectuer par pompe ;

le propulseur à pistons droits applique égale-ment des forces propulsives sur les culasses ayant des pistons lourds (7, 8) ou plus qui compriment un gaz recyclé et/ou qui percutent des ressorts, ces pistons sont animés par des volants (10) qui tournent dans des sens diffé-rents, et qui sont solidaires de bobines d'induc-tion (9), qui animent des induits (11) solidaires des pistons à l'aide d'embiellages (12, 13), le courant étant coupé aux moments adéquats pour permettre le rejet des pistons vers l'arrié-re ;

Le propulseur à pistons toriques est égale-ment valable pour l'automobile, et il peut per-mettre la mise en orbite d'un vaisseau spatial, le propulseur de longue durées à pistons droits prendra ensuite la reléve avec l'aide de l'atome.

EP 0 444 375 A1

# PERFECTIONNEMENTS APPORTES A DES PROPULSEURS A PISTONS DROITS ET TORIQUES

L'invention concerne des propulseurs à pistons droits et toriques animés par des combustions, des déflagrations, des détonations, des compressions de gaz recyclé, des ressorts, des dispositifs électromagnétiques.

L'emploi de fusées pour naviguer dans l'espace correspond à une monstruosité économique, il faut dépenser et soulever des tonnes de carburant et de comburant pour satelliser quelques kilos.

Actuellement à part le brevet Français 2 565 626 et une addition 89 16 434, et le brevet Européen 85 440055,3 personne n'a proposé autre chose que la fusée pour atteindre l'espace, les brevets sités appliquent des forces au véhicule transporteur à l'aide de pistons lourds droits ou toriques travaillant en opposition arrétés dans leur projection et comme le gaz de la fusée rejettés vers l'arriére par des combustions, des déflagrations, des détonations, des compressions de gaz, des ressorts.

Les pistons étant chargés d'énergie cinétique ils constituent des points d'appui bien supérieurs à l'inertie du gaz rejetté vers l'arriére par la fusée et ils sont des masses non perdues et réutilisables.

La présente invention à pour but le perfectionnement des propulseurs ébauché dans les brevets cités.

L'invention est exposée ci-aprés plus en détail à l'aide de dessins représentant les propulseurs perfectionnés.

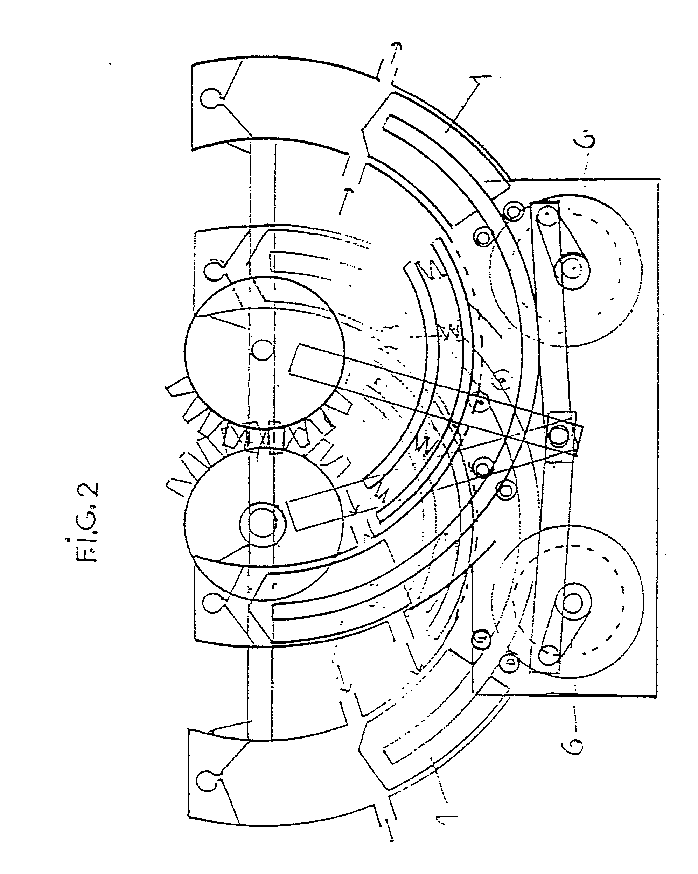

La figure 1 montre une vue schématique du propulseur qui travail en moteur deux temps et qui rejette alternativement ses pistons toriques appliquant de ce fait des forces autopropulsives sur ses culasses, ses pistons (1 sont reliés à l'aide de tiges toriques (2) qui sont solidaires d'un levier (3, solidaire d'un axe (11) solidaire d'un demi-engrenage (10) placé plus bas afin de pouvoir marier un autre propulseur identique (fig. 2), le levier (3) est egalement solidiare de deux bielles (12) solidaires de quatre manivelles (4) qui sont enfermées dans un carter (6), rempli à environ un tiers d'huile servant à graisser les pistons à l'aide d'une pompe. Le levier (3) est animé d'unmouvement de va et viens dans une fente creusées dans le carter, fente aveuglée par une piéce torique (7) qui coulise dans le levier (3) et qui est appuyée contre le carter par des ressorts (8) qui trouvent leur point d'appui sur un piéce (9) solidaire du bras (3).

Ce propulseur n'aura son plein rendement autopropulsif que si ses pistons sont rejetés vers l'arriére un peu avant le passage des points morts, ce une fois obtenue la mise en route le rejet prématuré sera obtenu par des avances à l'injection, à l'allumage adéquates, il se peut qu'il puisse utiliser la détonation en ne passant pas ses points morts des manivelles, et donner méant moins un mouvement rotatif si les axes des maniveles (4) sont munis d'encliquetages à cliquets ou à rouleaux , tout en pouvant servir de frein moteur pour l'automobile alimentation en carburant coupé et muni d'un systéme dembrayage rendant solidaires les volants (5) et d'autres volants solidaires des encliquetages.

L'énergie cinétique du piston et de la bielle du moteur classique est presque aussi forte que la force de l'explosion, cette force se perd en butant le vilbrequin, ajoutez à cela la force perdue sur la culasse, force inutilisée, le tirage et le poussage du piston de travers et vous n'obtenez que 30% de rendement propulsif, les moteurs préconisés non pas ces défauts.

Le moteur classique ne peut pas utiliser la grande force de la détonation car elle se perd au point mort bas et stop le volant qui est moins fort qu'elle, il y aurait portant interet à pouvoir l'utiliser car qu'elle serait la portée d'un obus tiré par un canon qui ne pourrait utiliser la détonation.

La figure 2 montre deux propulseurs accouplés afin que la poussée soi réctiligne.

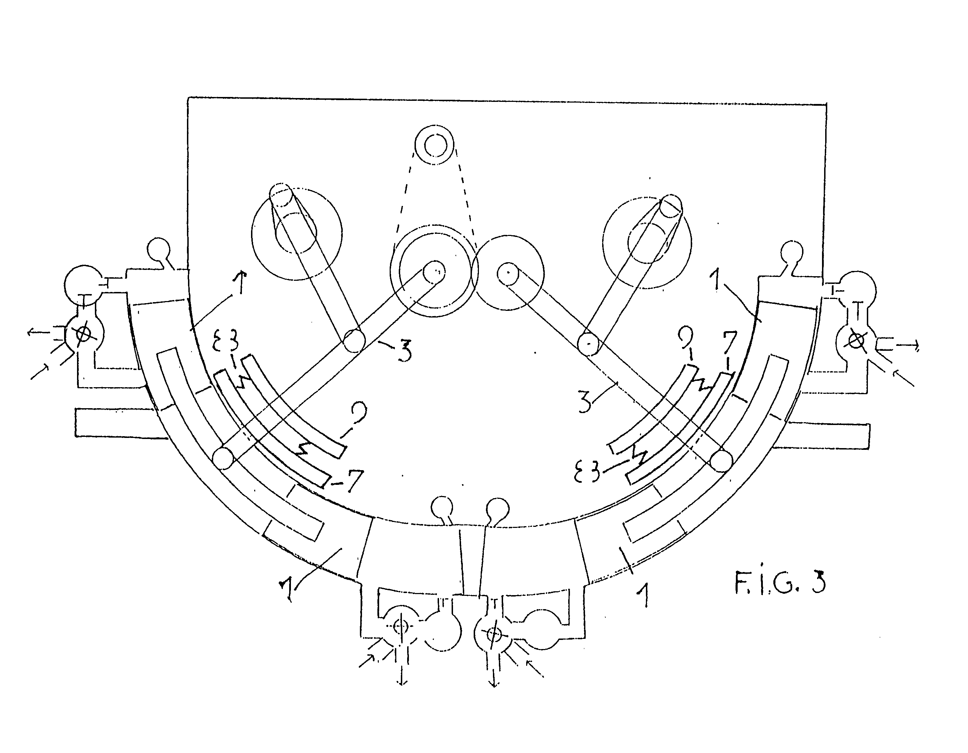

La figure 3 montre une variante de réalisation dont les leviers (3) coulissent également dans une fente creusée dans les cylindres toriques de l'huile peut également graisser les pistons de ce moteur s'il est muni de piéces toriques (7) appuyées contre les cylindres toriques.

Les dispositions mécaniques des moteurs deux temps préconisés permettent aux pistons de travailler en opposition cela facilite le non passage des points morts, donne l'autopropulsion et probablement permettra l'utilisation de la grande force de la détonation, avec pour résultat moins de consommation.

Ces moteurs peuvent fonctionner à l'essence ou en Diésel, le Diésel a l'inconvénient d'être un gros producteur de particules, l'invention préconise de bruler ces microparticules en injectant un peu d'essence dans une chambre de précombustion creusée dans la culasse, et d'injecter les autres hydrocarbures lourds dans une autre chambre creusée dans le piston, ou l'inverse les hydrocarbures lourds dans la chambre de culasse, et l'essence dans la chambre du piston, ce avec un léger décalage d'injection ou non, si cela provoque la détonation le travail des pistons en opposition permettra son utilisation, de méme deux injections de méme carburant dans deux chambres différentes ne semble pas avoir été préconisé, ce en particulier pour des moteurs deux temps classiques.

L'air sera remplacée dans le vide par de l'oxygéne liquéfiée dont les frigories serviront au refroidissement des moteurs; ou les hydrocarbures seront remplacés par de l'eau oxygéné à 85% dont la décomposition s'effectuera à l'aide d'injections de permanganate de K, de CA, de NA, l'oxygéne résultant peut être utilisée par l'équipage, et pour alimenter un autre moteur fonctionnant à l'aide d'hydrocarbures, le refroidissement des moteurs est réalisable à l'aide de radiateurs radiants orientés à l'ombre du soleil.

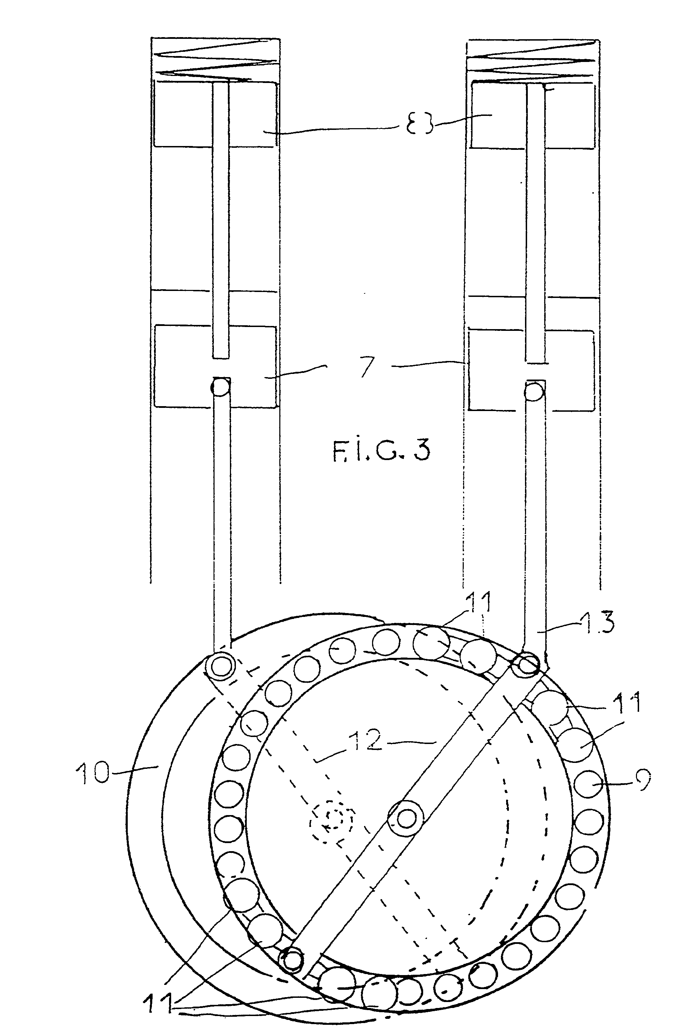

La figure 4 montre une variante de réalisation à pistons droits qui prendra la reléve des propulseurs à combustion interne une fois obtenue la vitesse de libération, propulseur pouvant donner des propulsions de trés longues durée s'il est alimenté en électricité à l'aidede l'atome, deux volants (10) mus par des moteurs électriques tournent chacuns dans des sens différents, ces volants sont solidaires de bobines d'inductions (9) qui animent des induits (11) solidaires de leviers (12) solidaires de bielles 13) solidaires de pistons (7) qui peuvent comprimer du gaz recyclé, de pistons (8) ou plus qui percutent des ressorts.

Le courant envoyé aux bobines d'induction et aux induits (11) étant coupé aux moments adéquats pour permettre le rejet vers l'arriére des pistons lourds (7, 8) par les ressorts comprimés.

Les poussées données par des pistons lourds percutant des ressorts seront plus que probablement supérieures à celles données par les propulseurs ioniques, photoniques actuellement préconisés, à qui il faut des torrents d'énergie pour obtenir des poussées dérisoires.

Pour ce propulseur électromagnétique des contacts solidaires des bielles non oscillantes (12) envoient et suppriment le courant électrique aux bobines d'induction et aux induits ce aux moments adéquats, afin de permettre le retour des pistons.

Il ne sert à rien d'inventer des moteurs à pistons toriques si l'on ne peut les construire, le brevet Francais 88 11 607 a préconisé une machine permettant l'usinage de ces pistons toriques, les cylindres toriques peuvent être réalisés en deux parties resoudées, ou boulonnées, ou être usinés à l'aide de la machine préconisée par le brevet Français 2 565 626.

L'utilisation de la détonation n'est possible qu'en ne passant pas les points morts, et si les pistons travaillent en opposition, les deux bielles (12) et les quatre vilbrequins permettront un fonctionnement court avec des détonations et le passage des points morts.

Si de l'essence est injectée dans la chambre de culasse elle peut être mise à feu en temps voulu par une bougie d'allumage. De méme le volume des injections de carburant de nature différentes, ou de méme nature dans l'une ou l'autre chambre peut être identique ou variable.

Pour le dispositif à cliquets ces cliquets sont solidaires des volants qui donnent le mouvement rotatif, ces volants tournent sur l'axe du volants (5), et la partie dentée de l'encliquetage est solidaire de l'axe du volant (5), les volants solidaires des cliquets sont munis de dents d'egrenages qui permettent la prise du mouvement rotatif, l'embrayages est placé entre les deux volants

## Revendications

1. Perfectionnements apportés à des dispositifs autopropulseurs à pistons droits et toriques caractérisés en ce que le propulseur à pistons droits a ses pistons animés par un dispositif électromagnétique, et celui à pistons toriques a ses pistons qui travaillent en moteur deux temps à combustion interne dont les vilbrequins multiples sont disposés latéralement, en ce que leur graissage et celui des pistons est réalisé à l'aide d'un carter (6) dont l'étanchéité est réalisée à l'aide d'une piéce (7) qui coulisse dans le levier oscillant (3), la piéce (7) étant appuyée contre le carter (6) par des ressorts (8) qui prénnent un point d'appui sur une autre piéce (9) solidaire du levier (3), en ce que ce propulseur dont les vilbrequins ne passent pas les points morts peut néant moins donner un mouvement rotatif à l'aide d'encliquetages.

2. Dispositif moteur muni d'encliquetages suivant la revendication 1, caractérisé en ce que les cliquets des encliquetages sont solidaires des volants qui donnent le mouvement rotatif, ces volants tournants sur l'axe des volants (5), et la partie dentée de l'encliquetage est solidaires de l'axe du volants (5) les volants solidaires des cliquets étant munis de dents d'engrenages qui permettent la prise du mouvement rotatif, en ce que l'embrayage est placé entre les deux volants.

3. Moteur à combustion interne selon la revendication 1, caractérisé en ce que des injections de carburant de nature différente ou de méme nature s'effecteuent dans une chambre creusée dans la culasse et dans une chambre creusée dans le piston, en ce que le volume des injections de carburant de nature différente ou de méme nature dans l'une ou l'autre chambre peut être identique ou variable, ce en particulier pour des moteurs deux temps.

4. Dispositif autopropulseur à pistons droits suivant la revendication 1, caractérisé en ce que des pistons droits lourds sont projetés vers l'avant à l'aide de bobines d'induction (9) solidaires de volants (10) qui tournent dans des sens différents, bobines actionnant des induits (11) solidaires de bielles (12 qui actionnent des bielles (13) solidaires de pistons (7, 8) ou plus qui appliquent une force au véhicule transporteur en comprimant un gaz recyclé et/ou des ressorts, en ce que le courant est coupé aux moments adéquats à l'aide de contact solidaire des bielles (12) pour permettre le retour des pistons vers l'arriére.

FiG.1

FIG.2

FIG. 3

F.I.G. 3

Office européen
des brevets

**RAPPORT DE RECHERCHE EUROPEENNE**

Numero de la demande

EP    90 47 0067

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | FR-A-2540570 (CALZOLARI)<br>* page 24, lignes 130 - 29; figures 1-5 *<br>--- | 1-4 | F02B75/32<br>F04B35/00<br>F02B53/02<br>F03G3/00 |
| D,A | FR-A-2565626 (CANOT)<br>* le document en entier *<br>--- | 1-4 | |
| A | FR-A-2595116 (CANOT)<br>* le document en entier *<br>--- | 1-4 | |
| A | FR-A-2608688 (OLIVIER)<br>* page 9, ligne 1 - page 10, ligne 21; figures 1-4 *<br>----- | 1-4 | |
| | | | **DOMAINES TECHNIQUES RECHERCHES (Int. Cl.5)**<br><br>F02B<br>F04B<br>F01C<br>F01B<br>F03G |

Le présent rapport a été établi pour toutes les revendications

| Lieu de la recherche | Date d'achèvement de la recherche | Examinateur |
|---|---|---|
| LA HAYE | 14 MARS 1991 | WASSENAAR G. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)